# EUROPÄISCHE PATENTSCHRIFT

(11) **EP 1 106 243 B1**
(45) Veröffentlichungstag und Bekanntmachung des Hinweises auf die Patenterteilung: **21.06.2006**
(21) Anmeldenummer: 00810432.5
(22) Anmeldetag: 18.05.2000
(51) Int. Cl.: B01F 13/00, B01F 7/00, B01F 7/16, A61C 9/00

(54) **Dynamischer Mischer.**
Dynamic mixer
Mélangeur dynamique

(30) Priorität: 02.12.1999 CH 221099
(43) Veröffentlichungstag der Anmeldung: 13.06.2001
(60) Teilanmeldung: 05016489.6
(73) Patentinhaber: Mixpac Systems AG, 6343 Rotkreuz (CH)
(72) Erfinder: Keller, Wilhelm A., 6402 Merlischachen (CH)
(74) Vertreter: AMMANN PATENTANWÄLTE AG BERN

(56) Entgegenhaltungen:
- EP-A- 0 492 412
- EP-A- 0 885 651
- DE-A- 19 947 331
- DE-C- 4 235 736
- US-A- 3 051 455
- US-A- 3 226 093
- US-A- 5 498 078
- PATENT ABSTRACTS OF JAPAN vol. 005, no. 195 (C-083), 11. Dezember 1981 (1981-12-11) & JP 56 118728 A (FUKUSHIMA TADAO), 17. September 1981 (1981-09-17)

## Beschreibung

Die vorliegende Erfindung bezieht sich auf einen dynamischen Mischer gemäss Oberbegriff von Patentanspruch 1. Ein solcher Mischer ist aus der EP-A-492 412 bekannt. Wesentlich bei diesem Mischer ist ein tellerförmiger Anschlusskörper, der einen Abstreifer mit bestimmter Ausgestaltung am Mischrotor enthält.

Aus der DE-C1-42 35 736 ist eine Vorrichtung zum Mischen und Austragen pastöser Massen bekannt, die eine Kombination eines statischen mit einem dynamischen Mischer enthält, wobei der statische Mischer zum Vormischen ausgebildet ist und eine gewisse Länge benötigt.

Die JP-A-56 118728 offenbart in ihrem Abstract eine Vorrichtung zum kontinuierlichen Rühren und Mischen zweier Komponenten, wobei eine Komponente über schmale Einlässe direkt in eine Vorrührkammer gelangt und die zweite Komponenten durch einen rotierenden Messerkranz zerkleinert und dort mit der anderen Komponenten vorgemischt wird, um in die Vorrührkammer zu gelangen.

Von diesem Stand der Technik ausgehend ist es Aufgabe der vorliegenden Erfindung, einen dynamischen Mischer anzugeben, mit dem eine verbesserte Mischqualität sowie eine Erhöhung der Mischleistung erzielt wird.

Gelöst wird diese Aufgabe durch die Merkmale des Anspruchs 1. Vorteilhafte Ausgestaltungen des Erfindung sind in dem abhängigen Ansprüchen dargestellt.

Die Erfindung wird im folgenden anhand von Zeichnungen von Ausführungsbeispielen näher erläutert.
- Figur 1: zeigt in einer Seitenansicht und teilweise geschnitten ein erstes Ausführungsbeispiel eines erfindungsgemässen Mischrotors,
- Figur 2: zeigt den Mischrotor von Figur 1 von der Eingangsseite,
- Figur 3: zeigt in einem Schnitt gemäss der Linie III-III in Figur 4 ein zweites Ausführungsbeispiel eines erfindungsgemässen Mischrotors,
- Figur 3A: zeigt einen Schnitt gemäss der Linie IIIA-IIIA in Figur 3,
- Figur 3B: zeigt einen Schnitt gemäss der Linie IIIB-IIIB in Figur 3,
- Figur 4: zeigt den Mischrotor von Figur 3 von der Eingangsseite,
- Figur 5: zeigt das Rotorgehäuse eines erfindungsgemässen Mischers gemäss Schnitt V-V in Fig. 6,
- Figur 6: zeigt das Rotorgehäuse von Figur 5 von der Eingangsseite,
- Figur 7: zeigt den Deckel des Rotorgehäuses der Figuren 5 und 6 gemäss Schnitt VII-VII in Fig. 8,
- Figur 8: zeigt den Rotorgehäusedeckel von der Ausgangsseite,
- Figur 9: zeigt einen Längsschnitt des zusammengebauten Mischers gemäss den Figuren 3-8 an Auslässen mit unterschiedlichen Durchmessern, und
- Figur 10: zeigt einen Längsschnitt des zusammengebauten Mischers gemäss den Figuren 3-8 an Auslässen mit gleichem Durchmesser.

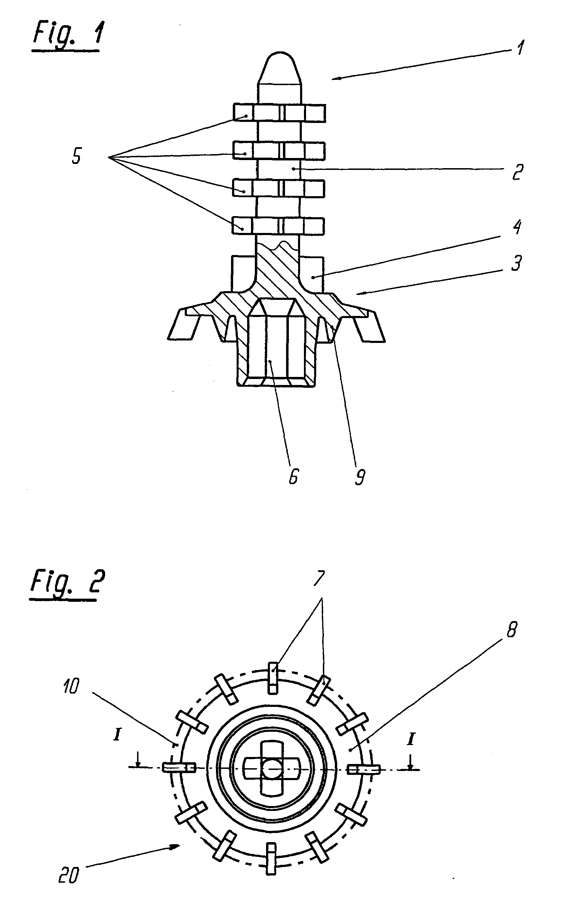

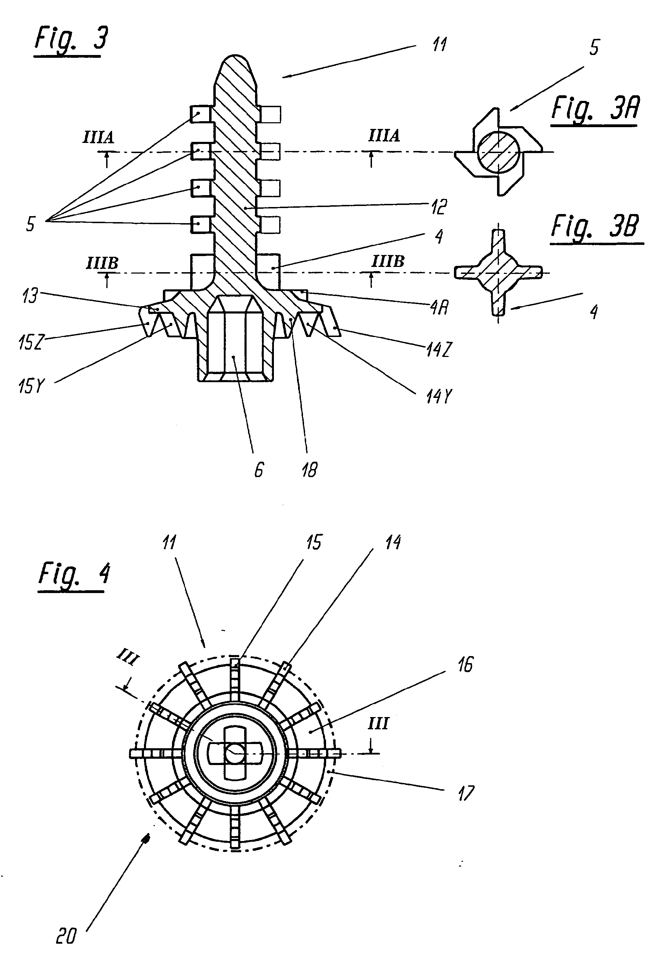

Der dynamische Mischer gemäss Erfindung besteht aus einem Mischrotor und einem Rotorgehäuse mit einem Rotorgehäusedeckel. In den Figuren 1 und 2 ist ein erstes und in den Figuren 3 und 4 ein zweites Ausführungsbeispiel eines Mischrotors gezeigt.

Der Mischrotor 1 gemäss den Figuren 1 und 2 enthält im wesentlichen eine Rotornabe 2, an der bei der Einlasseite eine Rotorscheibe 3 angeordnet ist. An der Rotorscheiben-Rückseite sind Mischflügel 4 und nachfolgend Mischnocken 5 angeordnet. Gemäss den Figuren 2 und 4 weist die Rotornabe an der Eingangsseite eine Mitnehmeröffnung 6 zum Eingriff mit dem Mitnehmer der Mischerantriebswelle auf, die auf verschiedenste Weise gestaltet werden kann, z.B. viereckig, sechseckig oder kreuzschlitzartig.

Eingangsseitig weist die Rotorscheibe Kammerstege 7 auf, die die Rotorscheibe in Kammerabschnitte 8 unterteilen. Diese Abschnitte dienen der proportionierten um 180° versetzten wechselweisen Aufnahme und dem Weitertransport der beiden zu vermischenden Komponenten. Um einen Stau der Komponenten zu vermeiden, sind die Stege 7 verkürzt, d.h. nicht ganz durchgehend ausgeführt. Die Rotorscheibe weist ferner einen Bund 9 auf, der der Aufnahme einer am Rotorgehäuse angebrachten Dichtlippe 34 dient. Zwischen dem Rotorgehäuse und dem Rotorscheibenumfang ergeben sich, durch die Stege 7 unterbrochen, ringförmige Spälte 10, durch die die Komponenten zur Rotorscheiben-Rückseite und von dort zu den Mischelementen im Zylindergehäuseteil gelangen.

Beim zweiten Ausführungsbeispiel eines Mischrotors gemäss den Figuren 3 und 4 erkennt man den Mischrotor 11 mit einer Rotornabe 12 an der beim Einlass eine Rotorscheibe 13 angeordnet ist. An der Rotorscheiben-Rückseite sind die Mischflügel 4 sowie weitere Mischflügel 4A und nachfolgend die Mischnocken 5 angeordnet. In Figur 3A ist der Querschnitt der Mischnocken 5 und in Figur 3B der Querschnitt der Mischflügel 4 dargestellt.

Eingangsseitig weist die Rotorscheibe 13 Mitnehmer auf, die sich abwechslungsweise unterschiedlich weit nach aussen erstrecken, wobei die Mitnehmer 15 weniger nach aussen ragen als die Mitnehmer 14. Die Mitnehmer 14 und 15 weisen ein zahnförmiges Profil auf, wobei sich jeweils ein Flügel 15Y oder 15Z an Mitnehmer 15 versetzt in bezug auf die Flügel 14Y oder 14Z an Mitnehmer 14 angeordnet sind.

Dadurch wird die Rotorscheibeneingangssseite in nicht abgeschlossene Kammerabschnitte 16 unterteilt, die der proportionierten, um 180° versetzten wechselweisen Aufnahme und dem Weitertransport der beiden zu vermischenden Komponenten dienen, und so zur Vormischung beitragen. Die Komponenten können, von den Einlässen her kommend, auch in diesem Ausführungsbeispiel nur über die zwischen den Mitnehmern sich ergebenden ringförmigen Spälte 17 zwischen dem Rotorscheibenumfang und Rotorgehäuse auf die Rotorscheibenrückseite gelangen. Es ist aber auch möglich, ringförmige Spälte näher zum Zentrum hin vorzusehen, zusammen mit den peripheren oder nur solche. Ferner weist die Rotorscheibe einen Bund 18 zur Aufnahme der Dichtlippe auf.

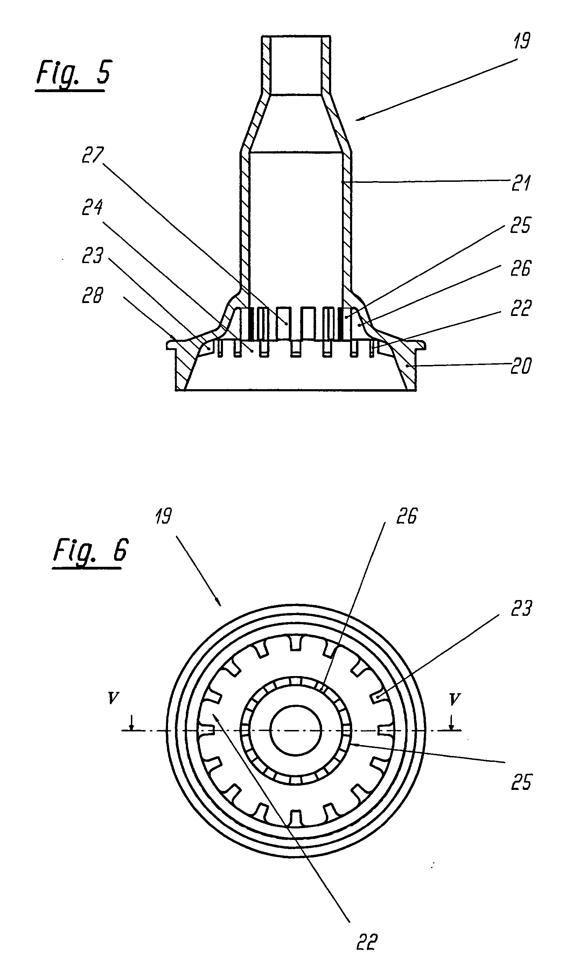

Der Mischrotor 1 oder 11 ist in einem zweiteiligen Rotorgehäuse angeordnet, das in den Figuren 5 bis 8 dargestellt ist. Das Rotorgehäuse 19 gemäss den Figuren 5 und 6 weist ein Tellergehäuseteil 20 zur Aufnahme der Rotorscheibe 13 und ein Zylindergehäuseteil 21 zur Aufnahme der Rotornabe 12 auf. An der Bodenfläche des Tellergehäuseteils 20 ist ein erster, äusserer Statorkamm 22 angeordnet, der aus einzelnen Stegen 23 besteht, wobei die vorgemischten Komponenten durch die Steg-Zwischenräume 24 zum zweiten, inneren Statorkamm 25 gelangen, der innere Stege 26 mit Zwischenräumen 27 aufweist, durch die die vorgemischten Komponenten zu den Mischflügeln 4A, 4 sowie zu den Mischnocken 5 gelangen, um von diesen nochmals zerteilt und vermischt zu werden. Der Tellergehäuseteil besitzt ferner eine Auflagefläche 28, an welche ein Bajonett-Ring 35 angreift.

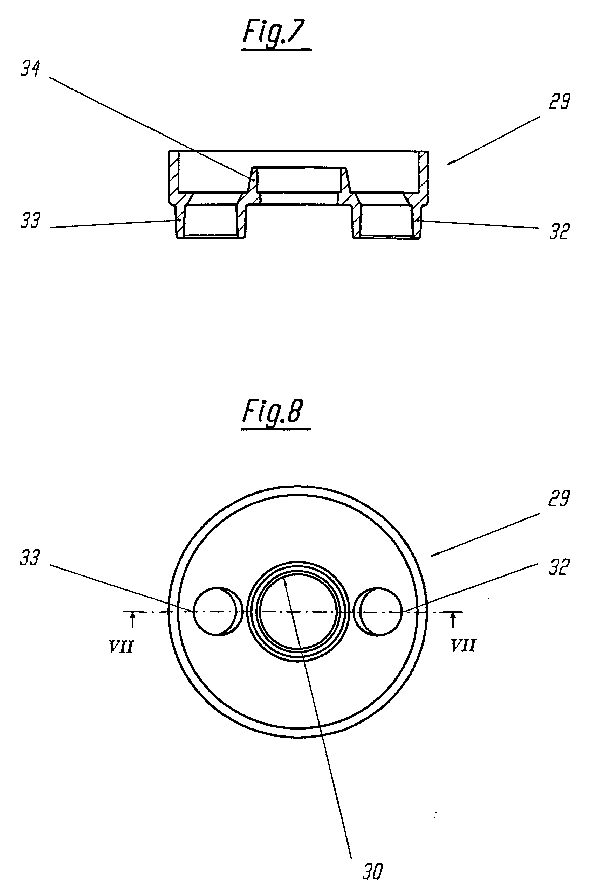

In den Figuren 7 und 8 ist ein Rotorgehäusedeckel 29 dargestellt, der ein Rotorlager 30 zur Aufnahme der Mitnehmernabe 31 sowie zwei gleiche Einlässe 32 und 33 aufweist. Zwecks guter Abdichtung der Mitnehmernabe weist der Rotorgehäusedeckel 29 eine Dichtlippe 34 auf.

Es ist ferner möglich, im Bereich der Mischnocken-Kränze weitere Statorelemente am Zylindergehäuseteil 21 vorzusehen, um eine weitere Verbesserung der Mischqualität zu erzielen.

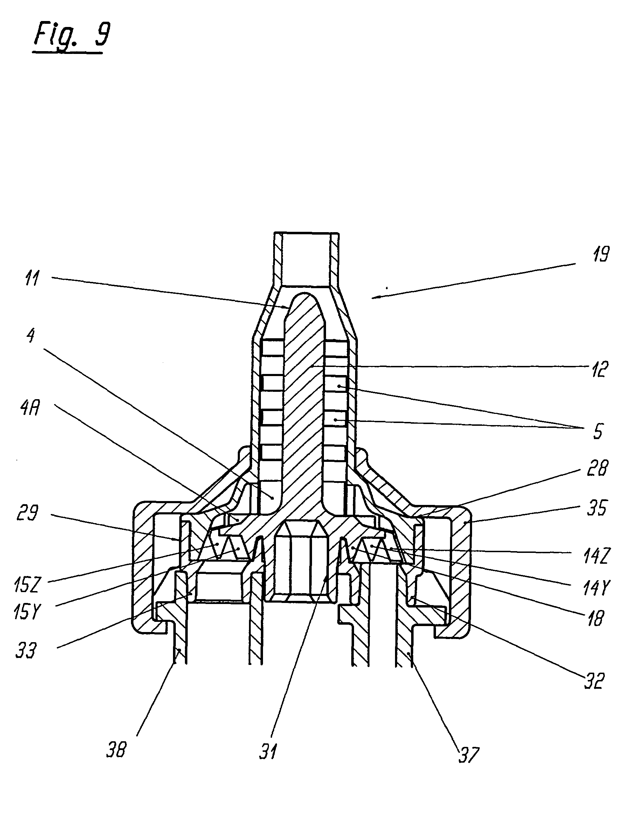

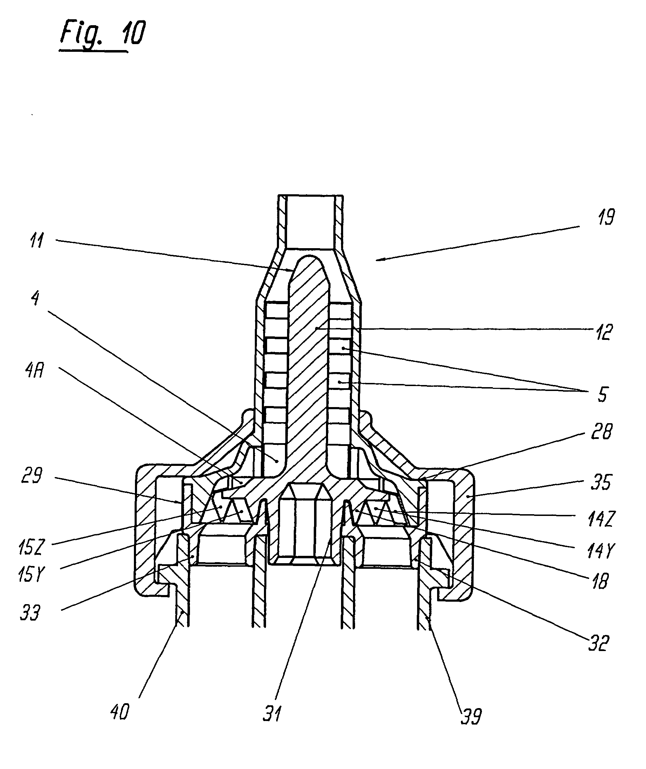

In den Figuren 9 und 10 ist dargestellt, dass bei geeigneter Dimensionierung ein Mischer gemäss Erfindung sowohl für Doppelkartuschen oder Austraggeräte mit Auslässen mit gleichem Durchmesser als auch für Doppelkartuschen oder Austraggeräte mit Auslässen mit verschiedenem Durchmesser verwendet werden kann und dies ohne sich um dessen Orientierung kümmern zu müssen.

In Figur 9 ist im Schnitt ein zusammengebauter Mischer mit gleich dimensionierten Einlässen dargestellt, der mit einer Doppelkartusche oder Austraggerät verbindbar ist, deren Behälter ein Querschnittsverhältnis von 5:1 und deren Auslässe unterschiedliche Durchmesser besitzen. In Figur 9 sind nur die Auslässe 37 und 38 eingezeichnet. Der eine Einlass 32 des Mischers ist über den kleineren Auslass 37 geschoben und der andere Einlass 33 des Mischers ist in den grösseren Auslass 38 eingeschoben, wobei der Mischer ohne vorgehende Orientierung aufgesetzt werden kann.

In Figur 10 ist dargestellt, dass derselbe Mischer wie in Figur 9 auch mit einer Doppelkartusche oder einem Austraggerät mit gleichen Auslässen verbunden werden kann, wobei die beiden Einlässe 32, 33 des Mischers in die Auslässe 39, 40 eingeschoben werden können, auch hier ohne vorhergehende Orientierung.

Bei beiden Ausführungen wird der Mischer mittels eines Bajonett-Rings 35 gesichert, wobei dieser auch ein Gewindemutter-Ring sein kann. Die Verwendung desselben Mischers ist auch für Doppelkartuschen oder Austraggeräten mit anderen Querschnittsverhältnissen und Auslass-Durchmessern als 1:1 und 5:1, z.B. 10:1, möglich.

Die beschriebene Anordnung ergibt bei gleicher Baulänge wie bei vorbekannten dynamischen Mischern eine wesentlich höhere Mischleistung und Mischqualität bei niedrigerer Drehzahl und arbeitet bei relativ geringem Staudruck. Die Erfindung ist nicht an die gezeigten Formen gebunden, andere Formen der Kammerabschnitte sowie der Statorkämme, Mischflügel oder Mischnocken sind im Rahmen des Erfindungsgedanken möglich.

## Patentansprüche

1. Dynamischer Mischer mit einem Rotorgehäuse, in dem ein drehbarer Mischrotor angeordnet ist, wobei das Rotorgehäuse (19) durch einen eingangsseitigen, tellerförmigen Deckel (29) abgeschlossen ist, an dem Einlässe (32, 33) für die zu mischenden Komponenten angeordnet sind, **dadurch gekennzeichnet, dass** der Mischrotor (1, 11), zur Vormischung der Komponenten, bei den Einlässen (32, 33) eine Rotorscheibe (3, 13) aufweist, deren eingangsseitige Oberfläche Mittel (7; 14, 15) zur Mitnahme der zu mischenden Komponenten aufweist und die mit Spälten (10, 17) versehen ist, die dem Durchtritt der vorgemischten Komponenten zur Rückseite der Rotorscheibe und zur Rotornabe (2, 12) dienen, an denen Mischelemente (4, 4A, 5) angeordnet sind.

2. Dynamischer Mischer nach Anspruch 1, **dadurch gekennzeichnet, dass** die Spälte (10, 17) ringförmig und am Umfang der Rotorscheibe (3, 13) angeordnet sind.

3. Dynamischer Mischer nach Anspruch 1 oder 2, **dadurch gekennzeichnet, dass** die Mittel zur Mitnahme der Komponenten Kammerstege (7) oder Mitnehmer (14, 15) sind, die Kammerabschnitte (8, 16) bilden.

4. Dynamischer Mischer nach einem der Ansprüche 1 bis 3, **dadurch gekennzeichnet, dass** die Mitnehmer (14, 15) sich abwechslungsweise verschieden weit nach aussen erstrecken, wobei die kürzeren Mitnehmer (15) im Profil Flügel (15Y, 15Z) aufweisen, die versetzt zu den Flügeln (14Y, 14Z) am längeren Mitnehmer (14) angeordnet sind.

5. Dynamischer Mischer nach einem der Ansprüche 1 bis 4, **dadurch gekennzeichnet, dass** das Rotorgehäuse (19) als Stator ausgebildet ist und ein Tellergehäuseteil (20) und ein Zylindergehäuseteil (21) aufweist und dass auf der Bodenfläche im Innern des Tellergehäuseteils mindestens ein Statorkamm (22, 25) angeordnet ist, durch dessen Zwischenräume (24, 27) die Komponenten zu den Mischelementen (4A, 4, 5) gelangen.

6. Dynamischer Mischer nach Anspruch 5, **dadurch gekennzeichnet, dass** im Tellergehäuseteil (20) zwei konzentrisch angeordnete Statorkämme (22, 25) angeordnet sind.

7. Dynamischer Mischer nach einem der Ansprüche 1 bis 6, **dadurch gekennzeichnet, dass** die Mischelemente Mischflügel (4, 4A) und kranzförmig angeordnete Mischnocken (5) enthalten.

8. Dynamischer Mischer nach einem der Ansprüche 1 bis 7, **dadurch gekennzeichnet, dass** auf der Innenseite des Rotorgehäusedeckels (29) eine Dichtlippe (34) zur Dichtung der Mitnehmernabe (31) angeordnet ist.

9. Dynamischer Mischer nach einem der Ansprüche 1 bis 8, **dadurch gekennzeichnet, dass** im Innern des Zylindergehäuseteils (21) weitere Statorelemente angebracht sind, um die Vermischung der Komponenten zu verbessern.

10. Dynamischer Mischer nach einem der Ansprüche 1 bis 9, **dadurch gekennzeichnet, dass** er mittels eines Bajonett-Rings (35) am Auslassende einer Doppelkartusche oder eines Austraggerätes befestigbar ist.

11. Dynamischer Mischer nach Anspruch 10, **dadurch gekennzeichnet, dass** er zwei gleiche Einlässe (32, 33) aufweist und die Doppelkartusche oder das Austraggerät entweder Auslässe (39, 40), die den gleichen Durchmesser besitzen oder Auslässe (37, 38) aufweist, deren Durchmesser verschieden sind, wobei, ohne Vororientierung, die Einlässe (32, 33) entweder in die Auslässe (39, 40) einschiebbar sind oder der eine Einlass (32) über den kleineren Auslass (37) schiebbar und der andere Einlass (33) in den grösseren Auslass (38) steckbar ist.

## Claims

1. Dynamic mixer comprising a rotor housing in which a rotatable mixing rotor is arranged, the rotor housing (19) being closed by a disk shaped cover (29) arranged on the inlet side thereof and provided with inlets (32, 33) for the components to be mixed, **characterised in that** for premixing the components, the mixing rotor (1, 11) comprises a rotor disk (3, 13) near the inlets (32, 33) whose surface facing the inlet side comprises means (7; 14, 15) for carrying along the components to be mixed and is provided with gaps (10, 17) serving for the passage of the premixed components to the back side of the rotor disk and to the rotor hub (2, 12) provided with mixing elements (4, 4A, 5).

2. Dynamic mixer according to claim 1, **characterised in that** the gaps (10, 17) are arranged in an annular shape and at the circumference of the rotor disk (3, 13).

3. Dynamic mixer according to claim 1 or 2, **characterised in that** the means for carrying along the components are chamber partitions (7) or carriers (14, 15) forming chamber sections (8, 16).

4. Dynamic mixer according to one of claims 1 to 3, **characterised in that** the carriers (14, 15) have alternating outward extents while the shorter carriers (15), seen in profile, are provided with blades (15Y, 15Z) that are staggered with respect to the blades (14Y, 14Z) on the longer carriers (14).

5. Dynamic mixer according to one of claims 1 to 4, **characterised in that** the rotor housing (19) is designed as a stator and is composed of a disk shaped housing portion (20) and of a cylindrical housing portion (21), and **in that** the bottom surface inside the disk shaped housing portion comprises at least one stator comb (22, 25) through the gaps (24, 27) of which the components flow to the mixing elements (4A, 4, 5).

6. Dynamic mixer according to claim 5, **characterised in that** two concentrically disposed stator combs (22, 25) are arranged in the disk shaped housing portion (20).

7. Dynamic mixer according to one of claims 1 to 6, **characterised in that** the mixing elements include mixing blades (4, 4A) and mixing projections (5) arranged in the shape of a crown.

8. Dynamic mixer according to one of claims 1 to 7, **characterised in that** a sealing lip (34) for sealing the carrier hub (31) is disposed on the inside of the rotor housing cover (29).

9. Dynamic mixer according to one of claims 1 to 8, **characterised in that** additional stator elements are provided on the inside of the cylindrical housing portion (21) in order to improve the mixture of the components.

10. Dynamic mixer according to one of claims 1 to 9, **characterised in that** it is attachable to the outlet end of a double cartridge or of a dispensing appliance by means of a bayonet ring (35).

11. Dynamic mixer according to claim 10, **characterised in that** it comprises two similar inlets (32, 33) and the double cartridge or the dispensing appliance either comprises outlets (39, 40) of equal diameters or outlets (37, 38) of different diameters, the inlets (32, 33) being either insertable into the outlets (39, 40) without the need of being previously aligned, or one of the inlets (32) fitting over the smaller outlet (37) while the other inlet (33) fits into the larger outlet (38).

## Revendications

1. Mélangeur dynamique comprenant un boîtier de rotor dans lequel est agencé un rotor de mélange rotatif, le boîtier de rotor (19) étant fermé par un couvercle (29) en forme de disque agencé du côté d'admission et muni d'orifices d'entrée (32, 33) pour les composants à mélanger, **caractérisé en ce que** le rotor de mélange (1, 11) comporte, pour le prémélange des composants, près des orifices d'entrée (32, 33) un disque rotor (3, 13) dont la surface en regard du côté d'admission comprend des moyens (7; 14, 15) pour entraîner les composants à mélanger et présente des fentes (10, 17) servant au passage des composants prémélangés vers l'arrière du disque rotor et vers le moyeu (2, 12) du rotor, qui sont munis d'éléments mélangeurs (4, 4A, 5).

2. Mélangeur dynamique selon la revendication 1, **caractérisé en ce que** les fentes (10, 17) sont agencées en forme annulaire et à la circonférence du disque rotor (3, 13)

3. Mélangeur dynamique selon la revendication 1 ou 2, **caractérisé en ce que** les moyens pour entraîner les composants sont des cloisons (7) de chambres ou des entraîneurs (14, 15) formant des sections (8, 16) de chambres.

4. Mélangeur dynamique selon l'une des revendications 1 à 3, **caractérisé en ce que** les entraîneurs (14, 15) ont une étendue alternante vers l'extérieur, les entraîneurs (15) plus courts, vus de profil, comportant des ailes (15Y, 15Z) décalées par rapport aux ailes (14Y, 14Z) sur les entraîneurs (14) plus longs.

5. Mélangeur dynamique selon l'une des revendications 1 à 4, **caractérisé en ce que** le boîtier de rotor (19) forme un stator et comprend une partie (20) de boîtier en forme de disque et une partie (21) de boîtier cylindrique, et que sur la surface du fond à l'intérieur de la partie en forme de disque du boîtier est agencé au moins un peigne (22, 25) stator par les interstices (24, 27) duquel les composants parviennent aux éléments mélangeurs (4A, 4, 5).

6. Mélangeur dynamique selon la revendication 5, **caractérisé en ce que** deux peignes (22, 25) stators sont agencés de manière concentrique dans la partie en forme de disque (20) du boîtier.

7. Mélangeur dynamique selon l'une des revendications 1 à 6, **caractérisé en ce que** les éléments mélangeurs comportent des ailes mélangeuses (4, 4A) et des cames mélangeuses (5) agencées en forme de couronne.

8. Mélangeur dynamique selon l'une des revendications 1 à 7, **caractérisé en ce qu'**une lèvre d'étanchéité (34) est agencée sur le côté intérieur du couvercle (29) du boîtier de rotor pour étancher le moyeu de l'entraîneur (31).

9. Mélangeur dynamique selon l'une des revendications 1 à 8, **caractérisé en ce que** des éléments de stator supplémentaires sont agencés à l'intérieur de la partie cylindrique (21) du boîtier afin d'améliorer le mélangeage des composants.

10. Mélangeur dynamique selon l'une des revendications 1 à 9, **caractérisé en ce qu'**il est attachable à l'extrémité de sortie d'une cartouche double ou d'un applicateur à l'aide d'une bague à baïonnette (35).

11. Mélangeur dynamique selon la revendication 10, **caractérisé en ce qu'**il comporte deux orifices d'entrée (32, 33) identiques et la cartouche double ou l'applicateur comporte soit des raccords de sortie (39, 40) du même diamètre, soit des raccords de sortie (37, 38) de différents diamètres, les orifices d'entrée (32, 33) étant soit enfichables dans les raccords de sortie (39, 40) sans orientation préalable, soit l'un des orifices d'entrée (32) enfichable sur le plus petit raccord de sortie (37) et l'autre orifice d'entrée (33) dans le plus grand raccord de sortie (38).
